# EUROPEAN PATENT APPLICATION

(11) **EP 0 793 928 A1**
(43) Date of publication of application: **10.09.1997**
(21) Application number: 97103557.1
(22) Date of filing: 03.03.1997
(51) Int. Cl.: A47B 81/06, A47F 5/00, G11B 33/04, G11B 23/023

(54) **Storage system**

(30) Priority: 08.03.1996 GB 9604908
(71) Applicant: McKechnie UK Limited, Walsall, West Midlands WS9 8DS (GB)
(72) Inventor: Sutherland, Richard Peter Rorison, Welford-on-Avon, Warwickshire (GB)
(74) Representative: Lucking, David John

(57) **Abstract**

A storage system (10) for first (11) and second (12) of sets of articles, the articles (11) of the first set being of a configuration different to the articles (12) of the first set, the system (10) comprising at least three elongate divider members (15, 16, 23) arranged generally parallel to one another, the spacing between the first (15) and second divider (16) members being different to the spacing between the second (16) and third (23) divider members such that the articles (11) of the first set are in use stored in a space between the first (15) and second (16) divider members and the articles (12) of the second set are stored in a space between the second (16) and third (23) divider members, each divider member having a plurality of generally parallel transverse recesses (51, 52...), and the system (10) further comprising a first set of support elements (43, 44) which extend across the space between the first (15) and second (16) divider members with opposite peripheral regions (41, 42) thereof received in a selected pair of the recesses (51, 52...) of the first (15) and second (16) divider members, and a second set of support elements (45, 46) which extend across the space between the second (16) and third (23) divider members with opposite peripheral regions (47,48) thereof received in a selected pair of the recesses (51, 52...) of the second (16) and third (23) divider members.

## Description

### Background to the Invention

This invention relates to a storage system and more particularly but not exclusively to a storage system for storing media items such as video cassettes, audio cassettes, in their individual cases.

Storage systems which are able to accommodate one kind of media items are known but are not sufficiently flexible to enable different kinds of media items to be stored.

According to a first aspect of the invention we provide a storage system for first and second of sets of articles, the articles of the first set being of a configuration different to the articles of the first set, the system comprising at least three elongate divider members arranged generally parallel to one another, the spacing between the first and second divider members being different to the spacing between the second and third divider members such that the articles of the first set are in use stored in a space between the first and second divider members and the articles of the second set are stored in a space between the second and third divider members, each divider member having a plurality of generally parallel transverse recesses, and the system further comprising a first set of support elements which extend across the space between the first and second divider members with opposite peripheral regions thereof received in a selected pair of the recesses of the first and second divider members, and a second set of support elements which extend across the space between the second and third divider members with opposite peripheral regions thereof received in a selected pair of the recesses of the second and third divider members.

Thus utilising a storage system in accordance with the invention, different kinds of media items or other articles can be stored by the system, the divider members being spaced apart an appropriate distance to receive the different kinds or sets of articles.

Preferably, each dividing member is adapted to be secured relative to a base so as to fix the spacing between the first and second and second and third divider members.

The base may be in a generally horizontal orientation in use, or a vertical orientation in which case the base may be part of a wall.

In one arrangement, at least one of the divider members may comprise at one end thereof an integral foot part with an opening adapted to receive a fastener thereby to secure the divider member at that end to the base. A cover part may be provided to conceal at least part of the foot part and the fastener.

Alternatively, or at the other end of the divider member, the system may include a securing element which is adapted to receive the dividing member and the securing element having an integral foot part with an opening adapted to receive a fastener thereby to secure the securing element and hence the divider member to the base.

Utilising such a securing element, the divider member may be cut to length to suit a particular application, secured to the base at one end by the integral foot part, and secured at the other end to the base by the securing element.

If desired, a cover part may be provided to conceal at least part of the securing element and the corresponding fastener, particularly where the securing element is located at an end of the divider member.

The support elements may each comprise eg, plane, panels of a width dimension appropriate to the desired spacing between the first and second divider members, or the second and third divider members, which in turn may depend upon a width dimension of the articles to be stored in the respective spaces.

The recesses of the divider members which receive the peripheral regions of the support elements may be provided by slots of a width corresponding generally to the thickness of the support elements. Preferably the thicknesses of the support elements of the first and second sets are generally identical.

The support elements of both the first and second sets may have generally identical height dimensions at least at their peripheral regions and all of the recesses of the divider members may be of generally the same shape and size.

Alternatively the recesses of the divider members which receive the peripheral regions of the support elements are provided between slots, the distance between any pair of slots corresponding generally to the thickness of the support elements.

In this latter arrangement, between each pair of slots there may be provided a tongue element which is resiliently deformed as an article is inserted between the slots, thus to form a recess for the article.

Thus the support elements may comprise end articles of the first and second sets, with the remainder of the articles of the first and second sets being stored between the respective end articles.

The articles of the first set may each be of generally cuboid configuration arranged side by side between a pair of support elements, the support elements of the pair being spaced apart a distance sufficient to accommodate a desired number of the articles of the first set. Of course where it is desired to expand the first set, and the support elements are distinct from the articles themselves, one of the support elements may be moved along the space between the first and second divider members.

The articles of the second set may each be of a generally cuboid configuration too, and may be arranged side by side between a pair of support elements, the support elements of the pair being spaced apart a distance sufficient to accommodate a desired number of the articles of the second set. Again if it is desired to expand the space provided to accommodate the articles of the second set, and the support elements are distinct from the articles themselves, one of the support elements may be moved along the space between the second and the third divider element, and received by an alternative pair of recesses of the divider members.

According to a second aspect of the invention we provide an item of furniture or a component part thereof, such as a drawer, shelf or cupboard including a storage system according to the first aspect of the invention.

The invention will now be described with reference to the accompanying drawings in which
Figure 1 is a perspective illustrative view of a storage system in accordance with the invention
Figure 2 is an enlarged illustrative perspective view of a divider member of the storage system in Figure 1, with component parts thereof separated for clarity
Figure 3 is a fragmentary perspective illustrative view of an alternative embodiment of a divider member for a storage system in accordance with Figure 1
Figure 4 is a plan view of a pair of the divider members of Figure 3, with an article received in a space between them.

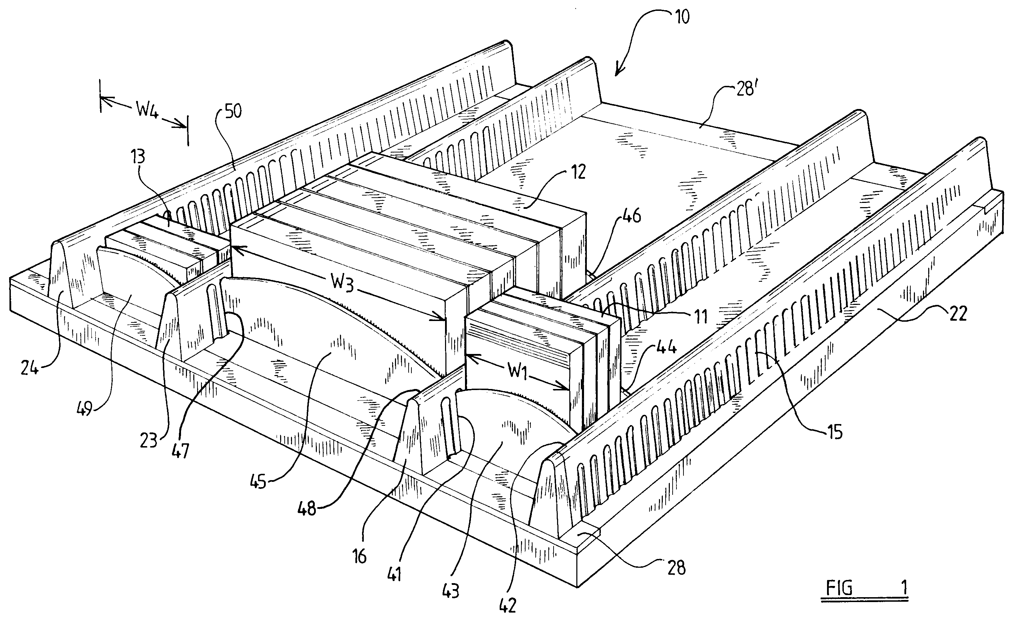

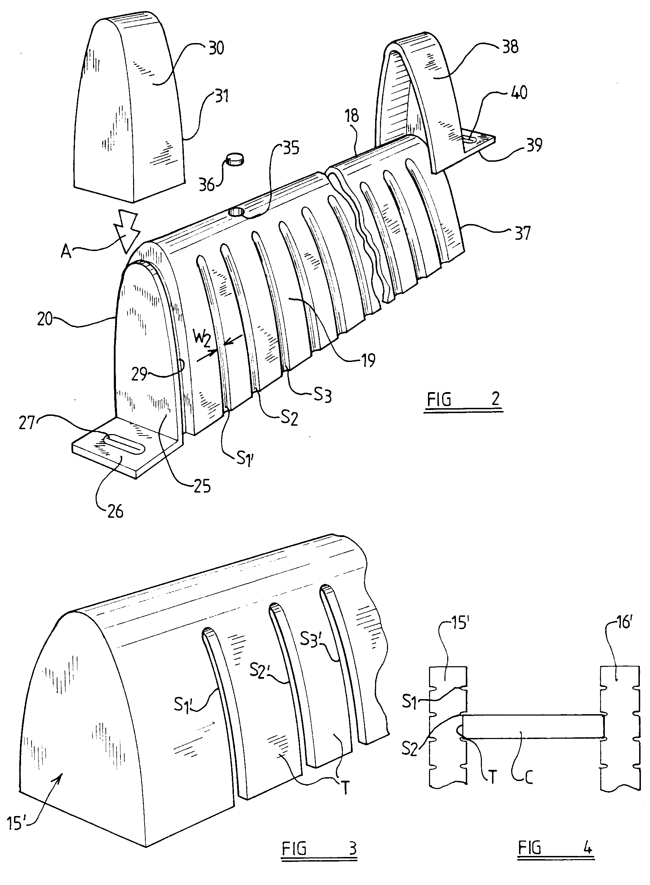

Referring to Figures 1 and 2 of the drawings there is shown a media storage system 10 which is adapted to store a first set of articles 11 comprising a plurality of Computer Discs (CD's) in their individual cases, a second set of articles 12 comprising in this example video cassettes received in their individual cases, and a third set of articles 13 comprising in this example audio cassettes contained within their individual storage cases.

Thus each of the articles of the first, second and third sets 11 to 13 are of generally cuboid configuration and when stored, are arranged side by side.

The storage system 10 comprises a first divider member 15, and a second divider member 16, which are spaced apart a distance not substantially greater than the width dimension W1 of the CD storage cases of the first set 11.

Each divider member 15, 16 is of generally arched cross-section having an apex 18, and convex sides 19 and 20 extending downwardly from the apex 18, towards a base 22.

Each of the divider members 15 and 16, and third and fourth divider members 23 and 24 which will be mentioned below, are of substantially identical configuration, and hence only one divider member 15 will be described in detail with reference to Figure 2.

Each divider member 15 comprises at one end 25 thereof, an end formation which includes an integral foot part 26 which has an opening 27 adapted to receive a fastener whereby the divider member 15 may be secured at end 25, to the base 22 either directly, or through a connection strip 28 indicated in Figure 1 which connects the four divider members 15, 16, 23, 24 and may be made integral therewith if desired.

The end formation 25 includes a flange 29 and there is provided a cover part 30 of a cross-section substantially the same as the remainder of the divider member 15, the cover part 30 having an open end 31 the periphery of which has a lip which is adapted to engage with the flange 29 as the cover part 30 is moved in the direction of arrow A, until the cover part 30 conceals the foot part 26 and any fastener thereby improving the aesthetic appeal of the divider member 15 at the end 25. A snap interconnection may be provided if desired.

Instead of securing the divider member 15 (and connection strip 28 where provided separately) to the base 22 via a fastener received in the opening 27, alternatively, there is provided an opening 35 in the apex 18 of the divider member 15 adjacent to the end 25, which may be closed by a removable plug 36, and is adapted to receive a fastener.

To secure an opposite end 37 of the divider member to the base 22, there is provided a securing element 38, again which has a cross-section generally corresponding to the cross-section of the divider member 15. However the securing element 38 is slightly larger than the cross-section of the divider member 15 and is adapted to receive the end 37 of the divider member within the securing member 38. The securing element 38 includes an integral foot 39 with an opening 40 for a fastener. The divider member 15 may thus be cut to an appropriate selected length, and the securing element 38 used to locate and secure the divider member 15 at end 37 relative to base 22.

In Figure 1, a system 10 configuration is shown in which the divider members 15, 16, 23, 24 are secured or integral with a further connection strip 28' which may be secured to the base 22 at ends 37 of the divider members in the same manner as opposite ends 25, or by securing elements such as shown at 38 in Figure 2.

Along the lengths of each of the divider member 15 there are provided in the embodiment shown in Figure 2, a plurality of slots S1, S2, S3 etc. Each slot has a width W2 corresponding generally to the thickness of a peripheral region 41 and 42 of a support element 43. The support element 43 comprises a generally plane panel, the peripheral regions 41 and 42 of which are shaped to correspond generally to the curved surface of the sides 19 and 20 of the divider elements 15 and 16. A support element 43 may be located in any desired aligned pair of slots S1, S2, S3 along the divider members 15 and 16. A second support element is illustrated at 44 which is of substantially identical configuration to support element 43, the support elements 43 and 44 defining between them a space appropriate to the number of storage cases of the articles of the first set 11, to be stored. As the collection of articles of the first set 11 is increased, the positions of the support elements 43 and 44 may be adjusted along the lengths of the divider members 15 and 16 so as to adjust the spacing between them. Preferably the support elements 43 and 44 are not spaced apart by a distance significantly greater than that required to store the articles of the first set 11, such that the articles of the first set 11 are maintained in a generally upright condition as shown in Figure 1.

The second and third divider member 16 and 23 are spaced apart by a distance slightly greater than a width W3 of the video storage boxes of the articles of the second set 12. A second set of support elements 45 and 46 are provided, which also comprise plane panels of a thickness corresponding to the width W2 of the slots S1, S2 etc, in the second and third divider members 16 and 23. Preferably the peripheral regions 47 and 48 of the second set of support elements 45 and 46 are of substantially identical dimension and configuration to the peripheral regions 41 and 42 of the first set of support elements 43 and 44 already described. Again the distance between the support elements 45 and 46 may be adjusted to accommodate a desired number of video storage boxes or other articles of the second set 12.

In this embodiment, between the third and fourth divider elements 23 and 24, there is a distance corresponding generally to a width dimension W4 of the audio cassette boxes of the articles of the third set 13 and a third set of support elements 49 and 50 are provided of a width corresponding to the space between the third and fourth divider members 23, 24, between which the articles of the third set 13 are stored.

Preferably each of the divider members 15, 16, 23 and 24 are made by moulding in plastic, but may be made in other materials if desired. Instead of the divider members being secured by securing elements 38 at their ends 37, the divider members may have end formations like end formation 25, ie, having an integral foot 26, although in this arrangement it would not be possible to cut the divider members 15, 16, 23 and 24 to length to accommodate different size bases 22.

It will be appreciated that at least where the distances between the pairs of divider members 15, 16 23 and 24 is not fixed eg, by being secured to connection strips 28, 28', the spacing may be arranged to accommodate any desired sets of articles between them, provided that there are support elements like support elements 43, 44 and 49 of an appropriate width dimension to support the articles along the length of the space between the appropriate pair of divider members.

The invention has been particularly developed in relation to a storage system for an item of furniture in which case the storage system 10 may be provided in a draw for example, or on a shelf or on the base of an item of furniture or on a component part thereof.

Referring now to Figures 3 and 4 there is shown divider member 15', 16' of an alternative embodiment. In this arrangement, instead of the recesses of the divider members 15', 16' being provided by slots like those shown at S1, S2 and S3 etc, in Figure 2, in this arrangement recesses are provided between a pair of slots S1' S2' etc, in the divider members 15', 16'. Thus between any adjacent pair of slots eg, slot S1' and S2', there is a generally resilient tongue element T which may be deformed as an article such as a CD storage case C is inserted into a space between the pair of divider members 15', 16'. Preferably such deformation is resilient such that the tongue T exerts a force on the article C so as rigidly to retain the article C in the space between the pair of divider members 15', 16' as illustrated in Figure 4.

In this arrangement, the end articles of a set of articles C would provide support elements between which the remainder of the articles of the set are stored. A storage system like that shown in Figure 1, or modified as described with reference to figure 1, may thus be provided utilising three or more divider members like divider members 15', 16' instead of divider members 15, 16, 23, 24.

Again divider members 15', 16' may be made in a plastics material or in another suitable material as desired. The divider members 15', 16' may be secured relative to the base 22 in the same manner as the divider members 15, 16, 23, 24 of the embodiments of Figures 1 and 2.

If desired a storage system may comprise a combination of divider members like those shown at 15, 16, 23, 24 in Figures 1 and 2, and divider members 15', 16' as shown in Figures 3 and 4. One of the divider members may have on one side thereof slots like slots S1, S2 etc, shown in Figures 1 and 2, and the other side of which may have slots like S1', S2' etc, and tongues T as shown in Figure 3 and 4.

In another arrangement (not shown) divider members of a storage system in accordance with the invention may be provided in a generally vertical rather than generally horizontal orientation and may be secured to a base comprising, for example a wall or other generally upright surface. Thus the support elements, where provided may comprise shelves on which articles may be placed. If necessary, some locking means to prevent inadvertent removal of the support elements from the divider members may need to be provided. For example the divider members and support elements may be provided with mutually interlocking formations to achieve this.

## Claims

1. A storage system (10) for first (11) and second (12) of sets of articles, the articles (11) of the first set being of a configuration different to the articles (12) of the first set, the system (10) comprising at least three elongate divider members (15, 16, 23) arranged generally parallel to one another, the spacing between the first (15) and second (16) divider members being different to the spacing between the second (16) and third (23) divider members such that the articles (11) of the first set are in use stored in a space between the first (15) and second (16) divider members and the articles (12) of the second set are stored in a space between the second (16) and third (23) divider members, each divider member having a plurality of generally parallel transverse recesses (S1, S2...), and the system (10) further comprising a first set of support elements (43, 44) which extend across the space between the first (15) and second (16) divider members with opposite peripheral regions (41, 42) thereof received in a selected pair of the recesses (S1, S2...) of the first (15) and second (16) divider members, and a second set of support elements (45, 46) which extend across the space between the second (16) and third (23) divider members with opposite peripheral regions (47,48) thereof received in a selected pair of the recesses (S1, S2...) of the second (16) and third (23) divider members.

2. A system according to claim 1 characterised in that the divider members (15, 16, 23) are each adapted to be secured relative to a base (22) so as to fix the spacing between the first (15) and second (16), and second (16) and third (23) divider members.

3. A system according to claim 2 characterised in that at least one of the divider members (15, 16, 23) comprises at one end (25) an integral foot part (26) with an opening (27) adapted to receive a fastener thereby to secure the divider member (15) at that end (25) to the base (22).

4. A system according to any one of claims 2 to 3 characterised in that the system (10) includes a securing element (38) which is adapted to receive a divider member (15), and the securing element (38) having an integral foot part (39) with an opening (40) adapted to receive a fastener thereby to secure the securing element (38) and hence the divider member (15) to the base (22), the securing element (38) being adapted to secure the divider member (15) at one end (37) to the base (22).

5. A system according to claims 3 or 4 characterised in that there is provided a cover part which in use conceals at least part of an integral foot part (26; 39) and the corresponding fastener.

6. A system according to any one of the preceding claims characterised in that the support elements (43, 44; 45, 46) each comprise a panel of a width configuration appropriate to the spacing between the respective divider members (15, 16, 23).

7. A system according to claim 6 characterised in that the recesses (S1, S2...) of the divider members (15, 16, 23) which receive the peripheral regions (41, 42; 47, 48) of the support elements (41, 42; 45, 46) are provided by slots of a width corresponding generally to the thickness of the support elements (43, 44; 45, 46), the support elements (43, 44; 45, 46) of both the first (11) and second (12) sets have generally identical transverse dimensions at their peripheral regions (41, 42; 47, 48) and all of the recesses (S1, S2...) of the divider members (15, 16, 23) are of generally the same shape and size.

8. A system according to any one of claims 1 to 5 characterised in that the recesses (S1, S2...) of the divider members (15', 16') which receive the peripheral regions (41, 42; 47, 48) of the support elements (43, 44; 45, 46) are provided between slots, the distance between any pair of slots corresponding generally to the thickness of the support elements C.

9. A system according to claim 8 characterised in that between each pair of slots (S1, S2) there is a tongue element T which is resiliently deformed as an article C is inserted between the slots (S1, S2) thus to form a recess for the article C.

10. A system according to any one of the preceding claims characterised in that the articles (11) of the first set are each of a generally cuboid configuration and are arranged side by side between a pair of support elements (43, 44), the support elements (43, 44) of the pair being spaced apart a distance sufficient to accommodate a desired number of the articles (11) of the first set, and the articles (12) of the second set are each of a generally cuboid configuration and are arranged side by side between a pair of support elements (45, 46), the support elements (45, 46) of the pair being spaced apart a distance sufficient to accommodate a desired number of the articles (12) of the second set.

11. An item of furniture or a component part thereof characterised in that it includes a base having secured thereto a storage system (10) according to any one of the preceding claims.
